(19)

Europäisches Patentamt

European Patent Office

Office européen des brevets

(11) **EP 4 775 950 A1**

(12) **EUROPEAN PATENT APPLICATION**

(43) Date of publication:
**15.07.2026 Bulletin 2026/29**

(21) Application number: **26150359.3**

(22) Date of filing: **06.01.2026**

(51) International Patent Classification (IPC):
***G01N 15/0205*** *(2024.01)*

(52) Cooperative Patent Classification (CPC):
**G01N 15/0211;** G01N 2015/0238

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.01.2025 TW 114100787**

(71) Applicant: **Microjet Technology Co., Ltd.**
**Hsinchu (TW)**

(72) Inventors:
• **Mou, Hao-Jan**
**Hsinchu (TW)**
• **Wu, Chin-Chuan**
**Hsinchu (TW)**

• **Yu, Jian-Cheng**
**Hsinchu (TW)**
• **Kuo, Yu-Chun**
**Hsinchu (TW)**
• **Chen, Hong-Jia**
**Hsinchu (TW)**
• **Chang, I-Shen**
**Hsinchu (TW)**
• **Chen, Wei-Jen**
**Hsinchu (TW)**
• **Huang, Chi-Feng**
**Hsinchu (TW)**

(74) Representative: **Uexküll & Stolberg**
**Partnerschaft von**
**Patent- und Rechtsanwälten mbB**
**Beselerstraße 4**
**22607 Hamburg (DE)**

(54) **DIGITAL DETECTION METHOD FOR SUSPENDED PARTICULATE MATTER**

(57)     A digital detection method for suspended particulate matter is disclosed and includes following steps: providing a particle sensor (1), wherein the particle sensor (1) includes an airflow channel (11), a miniature pump (12), a laser emitter (13) and a photodiode (PD) (14). The miniature pump (12) guides air having suspended particles toward a measuring region (A), and the laser emitter (13) positioned orthogonal to the measurement region (A) emits a laser beam, so as to generate scattered light. The scattered light is captured by the photodiode (PD) (14) and transformed into an electrical signal. The photodiode (14) uses a built-in digital algorithm to divide the electrical signal into N energy intervals (b). Numbers of the suspended particles are recorded cumulatively for each energy interval (b). A fine data distribution is formed for data processing and accumulation to calculate size of particles, total number of particles and concentration of the suspended particles for each particle size range (PM1, below PM2.5, and below PM10).

FIG. 3

EP 4 775 950 A1

**Description**

FIELD OF THE INVENTION

The present disclosure relates to an air quality monitoring technology, and more particularly to a digital detection method for suspended particulate matter, which utilizes digital algorithms to accurately detect the number and size of suspended particles based on the principle of optical scattering.

BACKGROUND OF THE INVENTION

As the attention to air pollution issues is gradually increased, PM (Particulate Matter) detection technology has become an important component of environmental monitoring and air purification equipment. Currently, the particle sensors are widely used and operated mainly based on the principle of optical scattering. Suspended particles are introduced into the measurement region through an airflow channel, and the interaction between a laser beam and particles is utilized to generate a scattered light. The scattered light is captured by an optical collection device and the detector, converted into an electrical signal, and processed to calculate the particle size distribution and the concentration.
However, the drawback of the conventional technologies is that the PM1, PM2.5 and PM10 ranges are defined solely based on the energy reaction threshold. It fails to provide precise information on particle quantity. Furthermore, the current data analysis primarily focuses on the particle concentration, but lacks detailed statistics on the number of particles within each particle size range. Therefore, there is an urgent need for an improved technological method that can accurately detect the size and the quantity distribution of suspended particulate matter, so as to provide more comprehensive air quality data.

SUMMARY OF THE INVENTION

One object of the present disclosure is to provide a digital detection method for suspended particulate matter. The energy signal is generated when suspended particles pass through a photodiode (PD), and combined with the principles of optical scattering and digital processing technology. Based on the intensity and the distribution of the scattered light, the intensity is divided into N different digital calibration distribution intervals. The number of particles is accumulated in each digital calibration distribution interval. A fine data distribution is formed for data processing and accumulation to calculate size of particles, total number of particles and concentration of the suspended particles for each particle size range (PM1, below PM2.5, and below PM10).
In accordance with an aspect of the present disclosure, a digital detection method for suspended particulate matter is provided and includes a step of: providing a particle sensor, wherein the particle sensor comprises an airflow channel, a miniature pump, a laser emitter and a photodiode (PD), wherein the miniature pump guides air having suspended particles toward a measuring region, and the laser emitter is positioned orthogonal to the measurement region and emits a laser beam, so that the suspended particles pass through the measurement region to generate scattered light, wherein the scattered light is captured by the photodiode (PD) and transformed into an electrical signal; and a step of: performing a digital algorithm by the photodiode (PD) as the suspended particles passing through the measurement region, wherein the digital algorithm is built-in and used to divide the electrical signal into N energy intervals, numbers of the suspended particles are recorded cumulatively for each energy interval, and, wherein equations for the digital algorithm are as follows:

$$PM1 = d \sum_{b=0}^{b=b1+PSD\_Trim} N(b + PSD_{Trim}) * s(b)^3$$

$$PM2.5 = d \sum_{b=0}^{b=b2.5+PSD\_Trim} N(b + PSD_{Trim}) * s(b)^3$$

$$PM10 = d \sum_{b=0}^{b=b10+PSD\_Trim} N(b + PSD_{Trim}) * s(b)^3$$

wherein, S(b) represents a particle size threshold, N(b) represents a passing time of the suspended particles, and $PSD_{Trim}$ represents a compensation value for comparing a standard instrument particle distribution map with an actual detected particle distribution map, each particle size range is calculated: PM1 suspended particle number is the sum of the number of particles within the N1 digital calibration distribution intervals; below PM2.5 suspended particle number is the sum of the number of particles within the N2.5 digital calibration distribution intervals; and below PM10 suspended particle number is the sum of the number of particles within the N10 digital calibration distribution intervals, wherein N1 represents the digital calibration distribution intervals of PM1 defined from the N energy intervals, N2.5 represents the digital calibration distribution intervals of PM2.5 defined from the N energy intervals, and N10 represents the digital calibration distribution interval of PM10 defined from the N energy intervals, wherein data processing and cumulative data are used to calculate size of particles, total number of particles, and concentration of the suspended particles for each particle size range.

BRIEF DESCRIPTION OF THE DRAWINGS

The above contents of the present disclosure will become more readily apparent to those ordinarily skilled in the art after reviewing the following detailed description and accompanying drawings, in which:

FIG. 1 is a flowchart illustrating a digital detection method for suspended particulate matter according to an embodiment of the present disclosure;
FIG. 2 is a schematic perspective view illustrating the particle sensor according to the embodiment of the present disclosure;
FIG. 3 is a schematic perspective view illustrating the configuration of the relevant components of the particle sensor according to the embodiment of the present disclosure;
FIG. 4 is a schematic diagram illustrating the laser beam emitted by the laser emitter and the scattered light captured by the photodiode (PD) in the particle sensor according to the embodiment of the present disclosure;
FIG. 5 is a cross-sectional view illustrating the arrangement of the laser beam emitted by the laser emitter and the photodiode (PD) in the particle sensor according to the embodiment of the present disclosure; and
FIG. 6 is a schematic diagram illustrating an embodiment of the digital detection method for suspended particulate matter in the present disclosure.

DETAILED DESCRIPTION OF THE PREFERRED EMBODIMENT

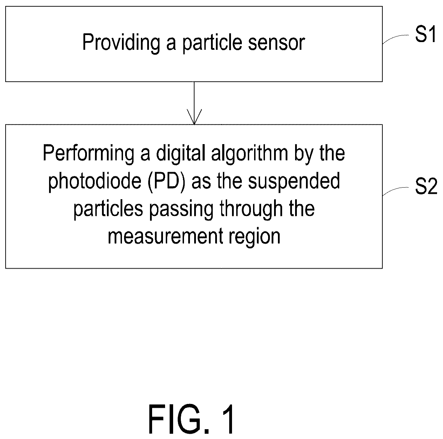

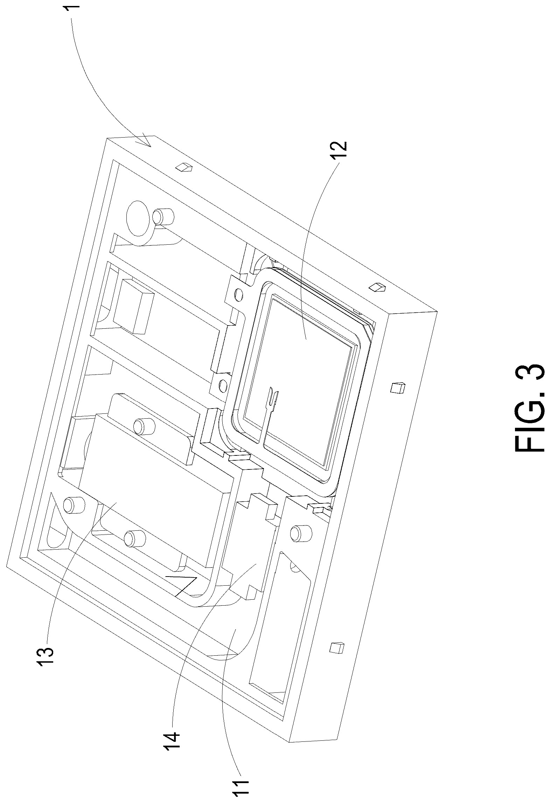

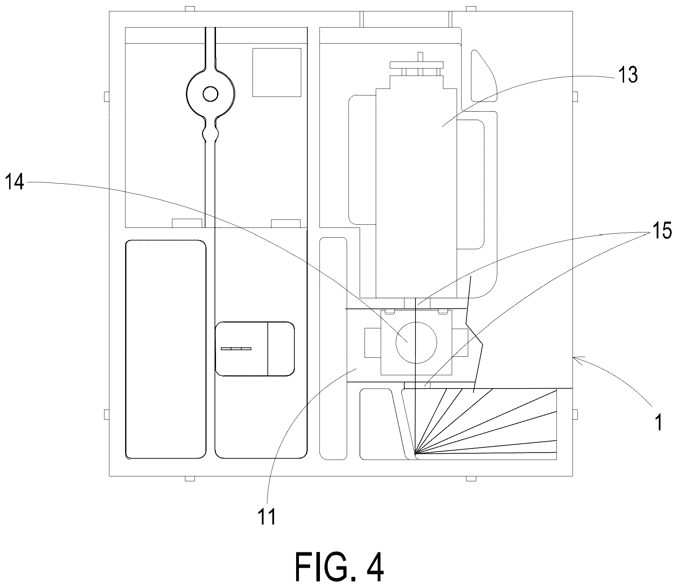

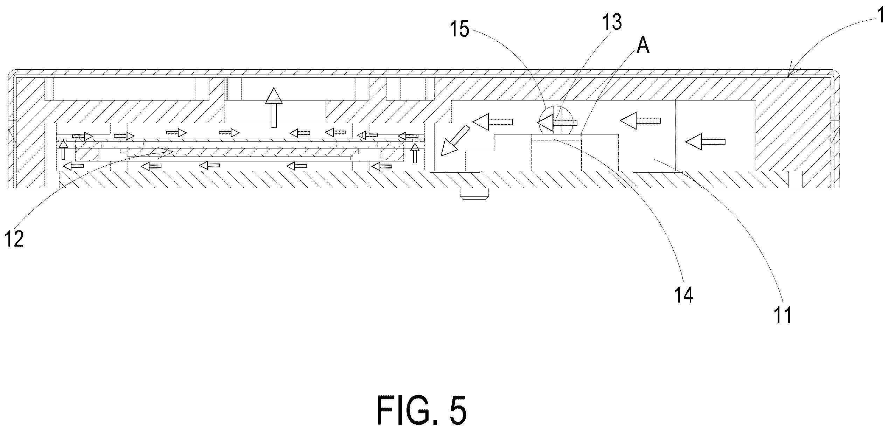

The present disclosure will now be described more specifically with reference to the following embodiments. It is to be noted that the following descriptions of preferred embodiments of this invention are presented herein for purpose of illustration and description only. It is not intended to be exhaustive or to be limited to the precise form disclosed.
Please refer to FIG. 1 to FIG. 5. The present disclosure provides a digital detection method for suspended particulate matter. The digital detection method includes a step S1 of: providing a particle sensor 1. In the embodiment, the particle sensor 1 includes an airflow channel 11 disposed therein. Furthermore, the particle sensor 1 includes a miniature pump 12, a laser emitter 13 and a photodiode (PD) 14 disposed within the airflow channel 11. The miniature pump 12 guides air having suspended particles toward a measuring region A. In the embodiment, the laser emitter 13 is positioned orthogonal to the measurement region A and emits a laser beam, so that the suspended particles pass through the measurement region A to generate scattered light, and the scattered light is captured by the photodiode (PD) 14 and transformed into an electrical signal. In a step S2, a digital algorithm is performed by the photodiode (PD) 14 as the suspended particles passing through the measurement region A. The digital algorithm is built-in and used to divide the electrical signal into N energy intervals. A cumulative number of suspended particles is recorded in each interval. Calculations are performed based on the digital algorithm. Equations for the digital algorithm are as follows:

$$PM1 = d \sum_{b=0}^{b=b1+PSD\_Trim} N(b + PSD_{Trim}) * s(b)^3$$

$$PM2.5 = d \sum_{b=0}^{b=b2.5+PSD\_Trim} N(b + PSD_{Trim}) * s(b)^3$$

$$PM10 = d \sum_{b=0}^{b=b10+PSD\_Trim} N(b + PSD_{Trim}) * s(b)^3$$

In the equations, S(b) represents a particle size threshold, N(b) represents a passing time of the suspended particles, and $PSD_{Trim}$ represents a compensation value for comparing a standard instrument particle distribution map with an actual detected particle distribution map. Each particle size range is calculated: PM1 suspended particle number is the sum of the number of particles within the N1 digital calibration distribution intervals; below PM2.5 suspended particle number is the sum of the number of particles within the N2.5 digital calibration distribution intervals; and below PM10 suspended particle number is the sum of the number of particles within the N10 digital calibration distribution intervals N1 represents the digital calibration distribution intervals of PM1 defined from the N energy intervals, N2.5 represents the digital calibration distribution intervals of PM2.5 defined from the N energy intervals, and N10 represents the digital calibration distribution interval of PM10 defined from the N energy intervals, wherein data processing and cumulative data are used to calculate the size of particles, the total number of particles, and the concentration of the suspended particles for each particle size range (PM1, below PM2.5, and below PM10).

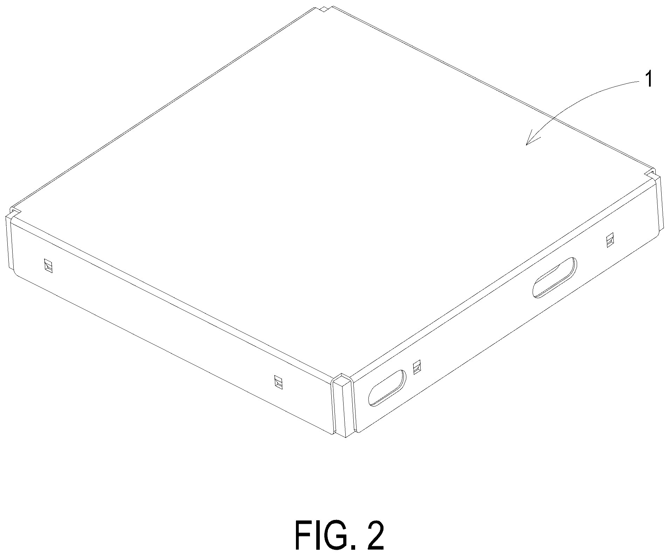

In the step S1, the particle sensor 1 is provided. As shown in FIG. 2 to FIG. 5, in the embodiment, the particle sensor 1 includes an airflow channel 11, a miniature pump 12, a laser emitter 13 and a photodiode (PD) 14 disposed therein. The miniature pump 12 guides air having suspended particles toward a measuring region A, and the laser emitter 13 is positioned orthogonal to the measurement region A and emits a laser beam to pass through a light-transmitting window 15, so that the suspended particles pass through the measurement region A to generate scattered light, and the scattered light is captured by the photodiode (PD) 14 and transformed into an electrical signal. Notably, in the embodiment, the miniature pump 12 is a piezoelectric pump that drives the induced airflow, so that a stable airflow is transported to flow uniformly through the measurement area A. The laser beam of the laser emitter 13 has a light source of a wavelength-stable monochromatic parallel light or focused light with a wavelength ranged from 450 nanometers (nm) to 650 nanometers (nm).

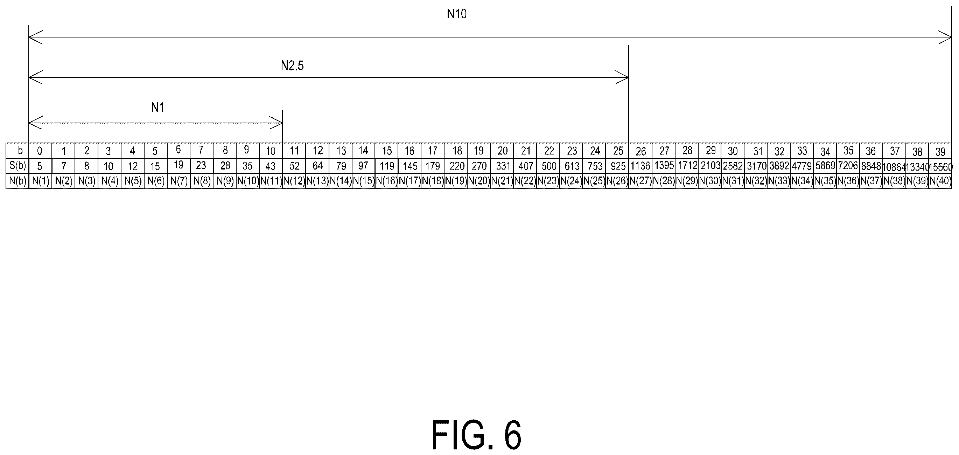

In the step S2, a digital algorithm is performed by the photodiode (PD) 14 as the suspended particles passing through the measurement region A. As shown in FIG. 6, the electrical signal is divided into N energy intervals b by using the built-in digital algorithm. The numbers of the suspended particles are recorded cumulatively for each energy interval, and the calculation is performed according to the digital algorithm. The equations for the digital algorithm are as follows:

$$PM1 = d \sum_{b=0}^{b=b1+PSD\_Trim} N(b + PSD_{Trim}) * s(b)^3$$

$$PM2.5 = d \sum_{b=0}^{b=b2.5+PSD\_Trim} N(b + PSD_{Trim}) * s(b)^3$$

$$PM10 = d \sum_{b=0}^{b=b10+PSD\_Trim} N(b + PSD_{Trim}) * s(b)^3$$

In the equations, S(b) represents a particle size threshold, N(b) represents a time it takes for the suspended particles to pass through, and $PSD_{Trim}$ represents a compensation value for comparing a standard instrument particle distribution map with an actual detected particle distribution map.

Each particle size range is calculated:

PM1 suspended particle number is the sum of the number of particles within the N1 digital calibration distribution intervals.

Below PM2.5 suspended particle number is the sum of the number of particles within the N2.5 digital calibration distribution intervals.

Below PM10 suspended particle number is the sum of the number of particles within the $N_{10}$ digital calibration distribution interval.

Furthermore, N1 represents the digital calibration distribution intervals of PM1 defined from the N energy intervals.

N2.5 represents the digital calibration distribution intervals of PM2.5 defined from the N energy intervals.

N10 represents the digital calibration distribution interval of PM10 defined from the N energy intervals In the embodiment, taking the electrical signal divided into 40 energy intervals as an example, the N1 digital calibration distribution intervals are the 0-10 digital calibration distribution intervals, the N2.5 digital calibration distribution intervals are the 0-25 digital calibration distribution intervals, and the N10 digital calibration distribution intervals are the 0-40 digital calibration distribution intervals.

Standard sample aerosols are utilized in the 40 energy intervals to form a standard instrument particle distribution map, which is compared with the actual detected particle distribution map for calibration, so that a $PSD_{Trim}$ comparison compensation value is formed. The actual detected particle size range will be calibrated according to the $PSD_{Trim}$ compensation value to ensure the accuracy of the actual detection data.

In this way, the energy signal generated when the suspended particles pass through the photodiode (PD)14 is divided into N different digital calibration distribution intervals according to the intensity thereof. The number of particles is recorded in each digital calibration distribution interval to form a fine data distribution. Data processing and cumulative data are used to calculate the size of particles, the total number of particles and the concentration of the suspended particles in each particle size range (PM1, below PM2.5 and below PM10). In other words, as passing through the photodiode (PD)14, the suspended particles are categorized into three ranges based on the energy response thresholds: PM1 particle size, below PM2.5 particle size, and below PM10 particle size. The thresholds falling within the 0-10 digital calibration distribution intervals indicate PM1 particle size; the thresholds falling within the 0-25 digital calibration distribution intervals indicate PM2.5 particle size; and the thresholds falling within the 0-40 digital calibration distribution intervals indicate PM10 particle size. Certainly, based on the built-in digital algorithm, the intensity is divided into N different digital calibration distribution intervals. The number of particles is recorded in each digital calibration distribution interval, forming a fine data distribution for data processing and cumulative data calculation to obtain that: PM1 suspended particle number is the sum of the number of particles within the N1 digital calibration distribution interval; below PM2.5 suspended particle number is the sum of the number of particles within the N2.5 digital calibration distribution interval; and below PM10 suspended particle number is the sum of the number of particles within the N10 digital calibration distribution interval. Notably, the cumulative particle data is updated at a frequency of once per second or higher during the photodiode (PD) 14 performing the digital algorithm in a measurement process.

From the above, the present disclosure provides a digital detection method for suspended particulate matter, which is combined with the principles of optical scattering and digital processing technology. The electrical signal is amplified and digitized. Moreover, based on the intensity and distribution of the scattered light, the electrical signal is fed into the built-in digital algorithm. By utilizing a partition model, the particle distribution data is calculated, and the precise quantities of PM1, PM2.5, and PM10 are output. The size of particles, the total number of particles, and the concentration of the suspended particles in each particle size range are accurately calculated.

In summary, the present disclosure provides a digital detection method for suspended particulate matter to solve the problem that the conventional technologies cannot accurately calculate the number of suspended particles. The energy signal generated when the suspended particles pass through the photodiode (PD)14 is divided into N different digital calibration distribution intervals according to the intensity thereof. The number of particles is accumulated in each digital calibration distribution interval. A fine data distribution is formed for data processing and accumulation to calculate the size of particles, the total number of particles and the concentration of suspended particles for each particle size range (PM1, below PM2.5, and below PM10).

## Claims

1. A digital detection method for suspended particulate matter, **characterized by** comprising steps of:

   providing a particle sensor (1), wherein the particle sensor (1) comprises an airflow channel (11), a miniature pump (12), a laser emitter (13) and a photodiode (PD) (14), wherein the miniature pump (12) guides air having suspended particles toward a measuring region (A), and the laser emitter (13) is positioned orthogonal to the measurement region (A) and emits a laser beam, so that the suspended particles pass through the measurement region (A) to generate scattered light, wherein the scattered light is captured by the photodiode (PD) (14) and transformed into an electrical signal; and

performing a digital algorithm by the photodiode (PD) (14) as the suspended particles passing through the measurement region (A), wherein the digital algorithm is built-in and used to divide the electrical signal into N energy intervals (b), numbers of the suspended particles are recorded cumulatively for each energy interval (b), and equations for the digital algorithm are as follows:

$$PM1 = d \sum_{b=0}^{b=b1+PSD\_Trim} N(b + PSD_{Trim}) * s(b)^3$$

$$PM2.5 = d \sum_{b=0}^{b=b2.5+PSD\_Trim} N(b + PSD_{Trim}) * s(b)^3$$

$$PM10 = d \sum_{b=0}^{b=b10+PSD\_Trim} N(b + PSD_{Trim}) * s(b)^3$$

wherein, S(b) represents a particle size threshold, N(b) represents a passing time of the suspended particles, and $PSD_{Trim}$ represents a compensation value for comparing a standard instrument particle distribution map with an actual detected particle distribution map, wherein each particle size range is calculated: PM1 suspended particle number is the sum of the number of particles within the N1 digital calibration distribution intervals; below PM2.5 suspended particle number is the sum of the number of particles within the N2.5 digital calibration distribution intervals; and below PM10 suspended particle number is the sum of the number of particles within the N10 digital calibration distribution intervals, wherein N1 represents the digital calibration distribution intervals of PM1 defined from the N energy intervals, N2.5 represents the digital calibration distribution intervals of PM2.5 defined from the N energy intervals, and N10 represents the digital calibration distribution interval of PM10 defined from the N energy intervals, wherein data processing and cumulative data are used to calculate size of particles, total number of particles, and concentration of the suspended particles for each particle size range.

2. The digital detection method for suspended particulate matter according to claim 1, wherein the data processing includes amplifying and digitizing the electrical signal, and using the digital algorithm to calculate the size of particles, the total number of particles, and the concentration of suspended particles for each particle size range based on the intensity and distribution of the scattered light.

3. The digital detection method for suspended particulate matter according to claim 1, wherein the laser beam of the laser emitter (13) has a light source of a wavelength-stable monochromatic parallel light with a wavelength ranged from 450 nanometers to 650 nanometers.

4. The digital detection method for suspended particulate matter according to claim 1, wherein a stable and uniform airflow of the airflow channel (11) is driven by the miniature pump (12) to flow through the measurement region (A).

5. The digital detection method for suspended particulate matter according to claim 1, wherein the cumulative particle data is updated at a frequency of once per second or higher during the photodiode (PD) (14) performing the digital algorithm in a measurement process.

6. The digital detection method for suspended particulate matter according to claim 1, wherein the digital algorithm divides the electrical signal into the N energy intervals (b), and standard sample aerosols are utilized to calibrate in the N energy intervals (b), so as to improve measurement accuracy.

EP 4 775 950 A1

```
┌─────────────────────────────────────┐
│                                     │      S1
│      Providing a particle sensor    │
│                                     │
└─────────────────────────────────────┘
                    │
                    ▼
┌─────────────────────────────────────┐
│   Performing a digital algorithm by │
│   the photodiode (PD) as the        │      S2
│   suspended particles passing       │
│   through the measurement region    │
└─────────────────────────────────────┘
```

FIG. 1

FIG. 2

FIG. 3

EP 4 775 950 A1

FIG. 4

FIG. 5

1

11

14

13

A

15

12

| b | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 | 34 | 35 | 36 | 37 | 38 | 39 |
|---|---|---|---|---|---|---|---|---|---|---|----|----|----|----|----|----|----|----|----|----|----|----|----|----|----|----|----|----|----|----|----|----|----|----|----|----|----|----|----|----|
| S(b) | 5 | 7 | 8 | 10 | 12 | 15 | 19 | 23 | 28 | 35 | 43 | 52 | 64 | 79 | 97 | 119 | 145 | 179 | 220 | 270 | 331 | 407 | 500 | 613 | 753 | 925 | 1136 | 1395 | 1712 | 2103 | 2582 | 3170 | 3892 | 4779 | 5869 | 7206 | 8848 | 10864 | 13340 | 15560 |
| N(b) | N(1) | N(2) | N(3) | N(4) | N(5) | N(6) | N(7) | N(8) | N(9) | N(10) | N(11) | N(12) | N(13) | N(14) | N(15) | N(16) | N(17) | N(18) | N(19) | N(20) | N(21) | N(22) | N(23) | N(24) | N(25) | N(26) | N(27) | N(28) | N(29) | N(30) | N(31) | N(32) | N(33) | N(34) | N(35) | N(36) | N(37) | N(38) | N(39) | N(40) |

FIG. 6

## EUROPEAN SEARCH REPORT

**Application Number**

EP 26 15 0359

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 110 756 A (IGLSEDER HEINRICH) 29 August 2017 (2017-08-29) * the whole document * | 1-6 | INV. G01N15/0205 |
| X | US 2019/234862 A1 (SCHLADITZ ALEXANDER [DE] ET AL) 1 August 2019 (2019-08-01) * paragraph [0047] - paragraph [0067] * * figures 1, 2 * | 1-6 | |
| X | CN 216 160 394 U (FUJIAN PROVINCE MEASUREMENT SCIENCE RES INSTITUTE FUJIAN PROVINCE GLAS) 1 April 2022 (2022-04-01) * paragraph [0028] - paragraph [0050] * * figures 1-9 * | 1-6 | |

**TECHNICAL FIELDS SEARCHED (IPC)**

G01N

The present search report has been drawn up for all claims

| Place of search | Date of completion of the search | Examiner |
|---|---|---|
| The Hague | 4 May 2026 | Liefrink, Feike |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 0359

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2026

| Patent document cited in search report | Publication date | Patent family member(s) | Publication date |
|---|---|---|---|
| CN 107110756 A | 29-08-2017 | CN 107110756 A | 29-08-2017 |
| | | DE 102014017220 A1 | 25-05-2016 |
| | | EP 3221685 A2 | 27-09-2017 |
| | | ES 2878448 T3 | 18-11-2021 |
| | | US 2017336313 A1 | 23-11-2017 |
| | | WO 2016078768 A2 | 26-05-2016 |
| US 2019234862 A1 | 01-08-2019 | CN 110095477 A | 06-08-2019 |
| | | EP 3521810 A1 | 07-08-2019 |
| | | ES 2778148 T3 | 07-08-2020 |
| | | JP 6824304 B2 | 03-02-2021 |
| | | JP 2019148585 A | 05-09-2019 |
| | | KR 20190093121 A | 08-08-2019 |
| | | PL 3521810 T3 | 18-05-2020 |
| | | US 2019234862 A1 | 01-08-2019 |
| CN 216160394 U | 01-04-2022 | NONE | |

EPO FORM P0459

For more details about this annex : see Official Journal of the European Patent Office, No. 12/82